(19) Europäisches Patentamt
European Patent Office
Office européen des brevets

(11) **EP 3 131 760 B1**

(12) **FASCICULE DE BREVET EUROPEEN**

(45) Date de publication et mention de la délivrance du brevet:
**30.06.2021 Bulletin 2021/26**

(21) Numéro de dépôt: **15709160.4**

(22) Date de dépôt: **10.03.2015**

(51) Int Cl.:
**B60B 25/22** *(2006.01)*    **B60C 15/02** *(2006.01)*
**B60B 23/00** *(2006.01)*

(86) Numéro de dépôt international:
**PCT/EP2015/054954**

(87) Numéro de publication internationale:
**WO 2015/158472 (22.10.2015 Gazette 2015/42)**

(54) **ADAPTATEUR POUR ENSEMBLE ROULANT ET ENSEMBLE ROULANT LE COMPRENANT**

ADAPTER FÜR EINE RADANORDNUNG UND RADANORDNUNG DAMIT

ADAPTER FOR ROLLING ASSEMBLY AND ROLLING ASSEMBLY COMPRISING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2014 FR 1453409**

(43) Date de publication de la demande:
**22.02.2017 Bulletin 2017/08**

(73) Titulaire: **Compagnie Générale des Etablissements Michelin**
**63000 Clermont-Ferrand (FR)**

(72) Inventeurs:
• **AHOUANTO, Michel**
  **F-63040 Clermont-Ferrand Cedex 9 (FR)**
• **BESTGEN, Luc**
  **F-63040 Clermont-Ferrand Cedex 9 (FR)**
• **PINEAU, Jacky**
  **F-63040 Clermont-Ferrand Cedex 9 (FR)**
• **TOPIN, Arthur**
  **F-63040 Clermont-Ferrand Cedex 9 (FR)**

(74) Mandataire: **Bauvir, Jacques et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A1- 0 633 150     WO-A1-2013/045618
CA-A1- 2 281 651     DE-A1- 2 358 358
GB-A- 2 039 831      US-A- 1 250 405

• **None**

**Description**

L'invention concerne un ensemble roulant formé principalement d'un adaptateur, d'un pneumatique et d'une jante.

L ensemble roulant de l'invention est de préférence utilisé dans le domaine des pneumatiques pour véhicules légers, tels que tourisme et camionnette, mais encore pour poids lourds, pour pneu génie civil et agricole.

On rappelle ci-après les définitions utilisées dans la présente invention :

- « direction axiale » : direction parallèle à l'axe de rotation du pneumatique,
- « direction radiale » : direction coupant l'axe de rotation du pneumatique et perpendiculaire à celui-ci,
- « radialement à l'intérieur » : signifie dont la distance radiale mesurée depuis l'axe de rotation du pneumatique est plus proche de l'axe de rotation,
- « radialement à l'extérieur » : signifie dont la distance radiale mesurée depuis l'axe de rotation du pneumatique est plus éloigné de l'axe de rotation
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement,
- « ensemble monté » : ensemble comprenant un pneumatique, une jante en acier ou aluminium et l'adaptateur selon l'invention.

Dans la demande WO02/068223, il est déjà connu d'insérer entre la jante et les bourrelets d'un pneumatique une virole flexible en matériau polymère destinée à assurer la jonction entre chaque bourrelet du pneumatique et les sièges de la jante grâce à des crochets métalliques disposés à chaque extrémité de la virole. Du fait de sa déformabilité élastique dans la direction radiale en partie centrale, la virole permet ainsi de maintenir, après gonflage, une pression maximale entre la jante et la virole.

Or, l'une des difficultés dans la conception des pneumatiques destinés à être montés sur jante rigide est de les rendre insensibles à des chocs, tels que nids de poule.

Mais si une telle virole permet à l'ensemble roulant d'en permettre une déformation selon la direction radiale, elle n'a pas été conçue pour fournir à l'ensemble roulant une flexibilité suffisante selon la direction axiale lui garantissant une protection suffisante lors de chocs contre un trottoir ou dans des trous présents dans la chaussée.

Tout au moins les inventeurs voulaient reconstituer d'une autre façon, une jante classique donc parfaitement rigide sans aucune contribution à une suspension ou à une flexibilité verticale.

D'autres solutions connues consistent à renforcer la nappe carcasse du pneumatique pour assurer une meilleure protection du pneumatique contre les chocs. Mais de telles solutions ne permettent pas pour autant de diminuer correctement l'intensité des efforts mécaniques supportés par le véhicule lors de chocs sur trottoir, et encore moins d'en diminuer les conséquences négatives sur les pneumatiques.

Le document US 1 250 405A décrit un pneumatique comprenant trois zones vulcanisées pour constituer un bandage pneumatique en forme d'arche aplatie, un support intérieur et un cœur élastique. Ce document ne donne aucune précision sur le rapport (largeur de jante W)/(largeur de l'adaptateur L).

Le document WO 2013/045618A1 décrit une roue allégée comprenant une jante en plastique renforcé de carbone et une étoile de roue en métal léger.

Le document CA2 281 651 décrit un pneumatique et un ensemble monté le comprenant. Le pneumatique comprend une base de montage sur la jante et des moyens de blocage du pneumatique sur la jante.

Le document GB 2 039 831 décrit un ensemble monté comprenant un pneumatique et une jante qui ne comprend aucune partie amovible.

Aussi il subsiste le besoin transformer la virole divulguée dans WO02/068223 afin de lui conférer en plus une aptitude à la flexibilité verticale minimisant ainsi au maximum l'endommagement partiel, voire total, de sa structure interne, tout en maintenant à un haut niveau les performances de tenue de route du pneumatique, en particulier son aptitude à développer d'importantes poussées de dérive. En outre, pour le moins, en cas d'endommagement dû à une utilisation anormalement sévère du pneumatique, il s'agit de mettre en sécurité le véhicule par son déplacement sur une courte distance suite à un choc destructeur de l'ensemble monté.

L'invention a donc pour objet un ensemble roulant selon la revendication 1 ayant un axe de rotation comprenant un pneumatique ayant deux bourrelets, une jante ayant une gorge de jante disposée entre deux sièges de jante ayant chacun une extrémité axialement extérieure, ladite jante présentant une largeur totale W entre chaque extrémité axialement extérieure desdits deux sièges de jante, ledit adaptateur assurant la jonction entre chaque bourrelet et chaque siège de jante, ledit adaptateur ayant :

- deux extrémités axialement extérieures comprenant chacune un siège d'adaptateur et une face d'appui d'adaptateur sensiblement comprise dans un plan perpendiculaire à l'axe de rotation,
- un corps reliant lesdites deux extrémités axiales extérieures de manière à former une pièce unitaire et comprenant au moins une armature de renforcement principale qui est ancrée dans chaque extrémité axialement extérieure à un élément de renforcement extérieur, tel q'une tringle, pour former un retournement, ledit corps comprenant un élément de blocage destiné à caler ledit adaptateur dans la gorge de jante,
- ledit adaptateur présentant une largeur axiale totale L comprise entre chaque siège d'adaptateur, et
- une face destinée à être en contact avec chaque siège de jante et avec la gorge de jante, et disposée radialement à l'intérieur.

L'ensemble roulant se caractérise en ce que le rapport W/L est supérieur ou égale à 20 et inférieur ou égale à 60%.

L'extrémité axialement extérieure de l'adaptateur délimite, axialement, un «logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

Ainsi, en fonctionnement de l'ensemble roulant selon l'invention et aux sollicitations de service pour lesquelles il est conçu, le pneumatique est immobilisé axialement par rapport à la jante, plus précisément les bourrelets du pneumatique sont immobilisés axialement par rapport à la jante de la même façon que pour un ensemble roulant classique dans lequel les bourrelets du pneumatique sont montés directement sur les sièges d'une jante, alors que les bourrelets du pneumatique ne sont pas immobilisés radialement par rapport à la jante, plus précisément les bourrelets du pneumatique sont capables d'un degré de déplacement radialement par rapport à la jante. En roulage standard, on peut dire qu'il n'y a quasiment pas de déformation axiale de l'adaptateur, ou alors elle est négligeable par rapport à la déformation radiale.

En revanche, lors d'un choc, la déformation axiale de l'adaptateur peut être importante, contribuant ainsi à réduire les contraintes sur l'ensemble monté.

De préférence le rapport W/L est supérieur ou égale à 25 et inférieur ou égale à 50.

L'adaptateur selon l'invention présente l'avantage d'être de constitution simple et d'utiliser un montage classique et déjà connu d'un pneumatique sur jante pour monter le pneumatique sur l'adaptateur en comparaison à la virole du document WO02/068223 dont les étapes de montage sont différentes et qui utilisent en particulier une mise en dépression. Cet adaptateur présente en outre l'avantage de pourvoir être non démontable contrairement au dispositif du document WO02/068223 qui est uniquement démontable et qui exclut l'utilisation d'un moyen de fixation complémentaire, telle qu'une frette.

De plus, contrairement à la virole divulguée dans le document WO02/068223, une liaison entre l'adaptateur selon l'invention et la gorge de jante doit toujours subsister lors des différentes étapes du montage. Selon le document WO02/068223, lors du montage, le pneumatique est, dans un premier temps, disposé sur la virole, puis cet ensemble est mis en dépression, grâce à l'élasticité de la virole, avant d'être disposé sur la jante par glissement axiale, et enfin mis sous sa pression nominale. La mise en dépression au cours du montage aboutit à la non mise en contact de la virole et de la jante. Par conséquent, pour permettre le maintien correct du pneumatique sur la jante à l'issue du montage, la jante doit être la plus large possible de manière à ce qu'après gonflage, un effort maximal puisse s'exercer entre le pneumatique et la virole.

La largeur totale W de la jante doit être inférieure à la largeur totale L de l'adaptateur de manière à garantir à cet adaptateur une élasticité suffisante qui permet d'absorber correctement le transfert des forces mécaniques inhérente à un choc. Une telle élasticité ne peut pas être obtenue lorsque la largeur de la jante est trop importante.

Le rapport W/L tel que défini dans l'adaptateur selon l'invention permet ainsi de garantir à un ensemble monté et gonflé, d'une part, une liaison mécanique permanente et suffisante entre le pneumatique et l'adaptateur, et d'autre part, une absorption correcte des forces mécaniques inhérentes à un choc.

De préférence, chaque extrémité axiale extérieure comprend un élément de renfort extérieur choisi parmi un métal (acier), nylon, PET, aramide. Il peut comprendre une matrice en résine et/ou fibres de renforcement, telle que rayonne, aramide, PET, nylon, fibre de verre, fibre de carbone, fibre de basalte, poly(éthylène2,6 naphtalate) (PEN), polyvinyl alcool (PVA).

L'élément de blocage peut présenter une longueur axiale totale supérieure ou égale à 10% et inférieure ou égale à 80%, et de préférence supérieure ou égale à 30% et inférieure ou égale à 50% de la largeur totale W de ladite jante.

Cet élément de blocage est de préférence présent dans la partie médiane de l'adaptateur, ce dernier étant destiné à s'insérer dans la gorge de jante correspondante de la jante. L'élément de blocage peut être constitué en une ou plusieurs parties reliées entre elles ou non.

L'élément de blocage peut également être présent à proximité de l'une des extrémités axialement extérieures ou sur tout emplacement sur le corps disposé entre la position médiane de l'adaptateur et l'une des extrémités axialement extérieures.

La gorge de jante peut également être disposée de manière décalée par rapport à la médiane de la jante. La jante présenterait alors deux sièges de jante de longueurs différentes.

Ainsi l'élément de blocage s'insère dans la gorge de jante. La gorge peut alors être disposée sur tout emplacement possible sur l'un des deux sièges de jante.

L'élément de blocage comporte de préférence un renfort qui présente un module d'extension supérieur à 4GPa, et de préférence supérieur à 12GPa. Ce renfort peut être choisi parmi le métal (acier), le nylon, le polyéthylène téréphtalate (PET), l'aramide. L'élément de blocage peut comprendre une matrice en résine et/ou des fibres de renforcement telles que la rayonne, l'aramide, le PET, le nylon, la fibre de verre, la fibre de carbone, la fibre de basalte, le poly(éthylène 2,6 naphtalate (PEN), le polyvinyl alccol (PVA), les polykétones.

L'élément de blocage peut être disposé à une longueur « 1 » située entre un axe médian YY'passant par le centre dudit élément de blocage et une des faces d'appui dudit adaptateur.

Cette longueur « 1 » est comprise entre une longueur minimale et une longueur maximale définies par les formules mathématiques suivantes :

$$l_{mini} = 0{,}1(W + W/2 + L)$$

et

$$l_{maxi} = L - 0{,}1(W + W/2 + L)$$

dans le cas d'une utilisation pour un véhicule de tourisme, le siège de jante aura une longueur au minimum égale à 5mm, avec

$$l_{mini} = 5 + 0{,}10W/2 + 0{,}1L$$

et

$$l_{maxi} = L - (5 + 0{,}1W/2 + 0{,}1L)$$

Le corps de l'adaptateur peut comprendre au moins une saillie. Cette saillie peut être présente au choix sur une extrémité axialement extérieure ou sur les deux. La saillie est de préférence constituée d'un élastomère classiquement utilisé dans le domaine du pneumatique.

La position de la saillie sur l'adaptateur selon l'invention peut avantageusement reprendre les conditions paramétriques définies par l'ETRTO (the European Tyre and Rim Technical Organisation).

Ainsi la distance « d » comprise entre le centre de la saillie et la face d'appui de l'adaptateur sera fonction de sa largeur axiale totale L de l'adaptateur. Le tableau ci-après donne quelques correspondances entre les valeurs de L et « d ».

**Tableau I**

| Largeur axiale L (pouces) | « d » minimale (mm) |
|---|---|
| 3 | 13 |
| Entre 3,5 et 4 | 16 |
| ≥ 4,5 | 21 |

La largeur «A» de siège de jante est supérieure ou égale à 10% de la largeur W de la jante.

La largeur « B » entre la face d'appui d'une extrémité axialement extérieure de l'adaptateur et l'extrémité axiale extérieure du siège de jante le plus proche de ladite face d'appui est supérieure ou égale à 10% de la largeur totale L de l'adaptateur, et préférentiellement supérieure ou égale à 15%. Pour la roue d'un véhicule de tourisme cette largeur « B » est supérieure ou égale à 21mm.

Le corps de l'adaptateur selon l'invention est constitué d'une armature de renforcement principale formée de préférence d'au moins une nappe de câbles en métal (acier), en textile (rayonne), aramide, PET, nylon, fibre de de verre, fibre de carbone, fibre de basalte, poly(éthylène2,6naphtalate) (PEN), polyvinyl alcool (PVA), de polykétones parallèles entre eux dans la nappe et radiaux. La nappe est ancrée dans chaque extrémité axialement extérieure à chaque élément de renforcement extérieur, tel qu'une tringle pour former un retournement. Lorsque le corps comprend plusieurs nappes de renforts, ces dernières présentent un angle compris entre 90° et 35° par rapport à la direction circonférentielle. Lorsque le corps ne comprend qu'une seule nappe de renforts, celle-ci sera orientée entre 60° et 90°, et plus préférentiellement à 90°, par rapport à la direction circonférentielle.

L'armature de renforcement principale dudit corps peut présenter un module d'extension supérieur ou égal à 4GPa.

Les nappes comprennent de préférence les constituants élastomères classiquement utilisés dans le domaine du pneumatique, tels que les caoutchoucs réticulables par des réactions chimiques de vulcanisation par des ponts soufre, par des liaisons carbone-carbone créées par l'action de peroxydes ou de rayonnements ionisants, par d'autres chaînes d'atomes spécifiques de la molécule de l'élastomère, en second lieu, les élastomères thermoplastiques (TPE) où la partie déformable élastiquement forment un réseau entre des régions « dures » peu déformables dont la cohésion est le fruit de liaisons physiques (cristallites ou régions amorphes au-dessus de leur température de transition vitreuse), ensuite les élastomères non thermoplastiques et enfin les résines thermodurcissables.

Le corps de l'adaptateur peut comprendre une frette disposée sur au moins une partie de sa surface radialement externe et/ou au moins une partie radialement interne de l'armature de renforcement. La frette utilisée selon l'invention est choisie parmi les matériaux classiquement utilisés dans cette fonction et dans le domaine du pneumatique, et présentant un module d'extension supérieure ou égale à 4GPa, voire supérieure ou égale à 12GPa.

Cette frette peut être solidaire ou non de l'adaptateur. Si elle n'est pas solidaire de l'adaptateur, elle peut être mise en place après le montage de l'adaptateur sur la jante.

La frette peut être collée à froid ou à chaud sur l'adaptateur. La frette peut encore être fixée par tous moyens mécaniques, tels que serrage, vissage.

Dans le cas où l'adaptateur est fixé avant d'être disposé sur la jante, alors l'assemblage entre la jante et l'adaptateur est réalisé en force. L'adaptateur est par conséquent rendu indissociable de la jante, et donc non démontable.

L'adaptateur peut être collé à froid ou à chaud sur la jante après un traitement préalable éventuel du métal constituant la jante. Lorsque l'adaptateur est collé à chaud ou à froid sur la jante, l'adaptateur est non démontable.

Dans les autres cas, il peut être considéré comme démontable.

L'adaptateur comprend au moins une bande conductrice, amovible ou non, disposée sur la totalité ou sur une partie du pourtour circonférentielle dudit adaptateur, et sur un trajet complet allant de la face d'appui d'adaptateur à la jante J. La présence de la bande conductrice permet en outre d'assurer la conduction de l'électricité entre le sol et la roue, et donc entre le sol et le véhicule notamment lorsque la conductivité des compositions élastomères n'est pas suffisante, et ceci d'autant plus que le pneumatique ne repose pas directement sur la roue mais sur un adaptateur.

De préférence, lorsque la bande conductrice est amovible ou non amovible, elle est disposée entièrement à la surface radialement externe au corps.

De préférence, lorsque la bande conductrice est non amovible, elle est partiellement enfouie sous la surface radialement externe du corps.

De préférence, la bande conductrice présente une résistivité électrique inférieure ou égale à $10^8$ Ohm.cm, et de préférence inférieure ou égale à $10^7$ Ohm.cm.

De préférence, la bande conductrice est constituée au choix en une lame métallique ou en une composition élastomère comprenant du noir de carbone en une quantité supérieure ou égale à 15%.

De préférence, le noir de carbone de la composition élastomère présente une surface spécifique supérieure ou égale à $500m^2/g$.

De préférence, lorsque la bande conductrice est non amovible, elle est collée ou réticulée à la composition élastomère du corps.

La jante peut être constituée en un matériau choisi parmi les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

De préférence, les matériaux composites à base de fibres comprennent des fibres ayant une longueur supérieure ou égale à 5mm.

La matrice à base de composés thermodurcissables est choisie parmi les résines époxy, le vinylester, les polyesters insaturés, le cyanate ester, le bismaléimide, les résines acryliques, les résines phénoliques, les polyuréthanes et leur combinaison.

La matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

L'invention va maintenant être décrite à l'aide des exemples et figures annexées qui sont uniquement donnés à titre d'illustration, et dans lesquels :

- La figure 1 représente une vue schématique en coupe d'un mode de réalisation de l'adaptateur selon l'invention,

- La figure 2 représente une vue schématique en coupe d'un mode de réalisation de l'adaptateur selon l'invention monté sur une jante, et

- La figure 3 représente une vue schématique en coupe d'un autre mode de réalisation de l'adaptateur selon l'invention, et

- La figure 4 représente une vue schématique en coupe d'un ensemble roulant comprenant l'adaptateur selon l'invention, un pneumatique et une jante selon un premier mode de réalisation,

- La figure 5 représente une vue schématique en coupe d'un ensemble roulant comprenant l'adaptateur selon l'invention, un pneumatique et une jante selon un second mode de réalisation,

- La figure 6 représente une vue schématique en coupe d'un ensemble roulant comprenant l'adaptateur selon l'invention, un pneumatique et une jante selon un troisième mode de réalisation.

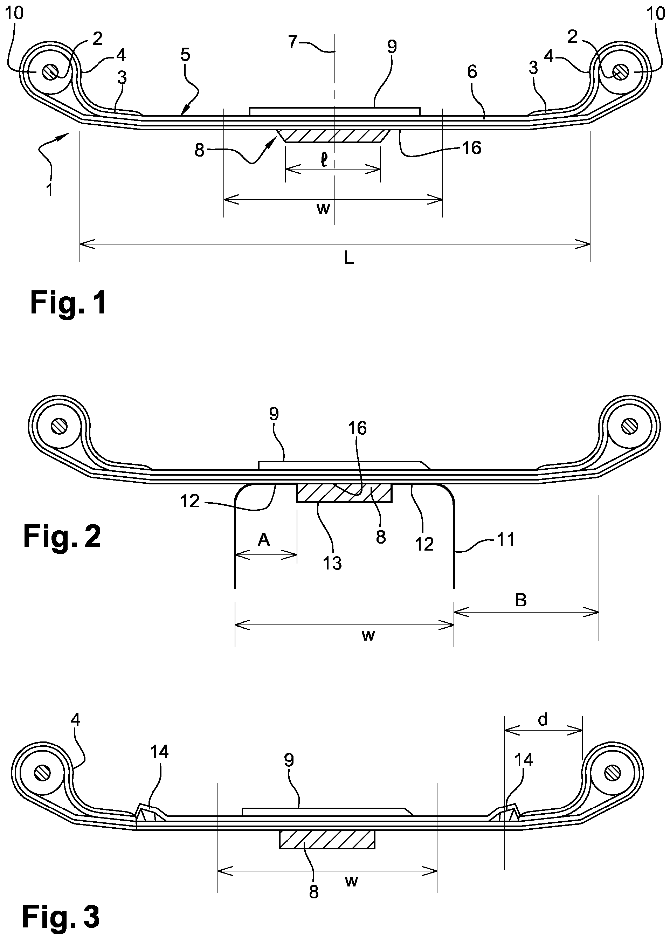

Comme le montre la figure 1, l'adaptateur de référence général 1, sensiblement de forme linéaire, comprend deux extrémités 2 axialement extérieures opposées comprenant chacune un siège d'adaptateur 3 et une face d'appui 4 d'adaptateur correspondante sensiblement comprise dans un plan perpendiculaire à l'axe de rotation d'un pneumatique. Un corps 5 relie les deux extrémités 2 de manière à former une pièce unitaire. Le corps comprend au moins une armature de renforcement 6 constitué de deux nappes comprenant des renforts textiles. Les deux nappes font un angle de 45° avec la direction circonférentielle. L'adaptateur présente une largeur axiale totale L égale à 190.5mm mesurée entre chaque surface d'appui 4.

Une face 16 pouvant être délimitée par des repères en surface et située radialement à l'intérieure de l'adaptateur 1, est destinée à être en contact avec une gorge 13 de jante et les sièges de jante 12 (figure 2).

Le corps 5 comprend dans sa partie médiane (représentée par un axe 7) un élément de blocage 8 ayant une longueur axiale totale égale à 25% de la largeur L pour un roue de tourisme de largeur 7,5 pouces, soit de 190,5 mm. L'élément de blocage 8 est constitué en caoutchouc qui présente un module d'extension égale à 50GPa.

Selon ce mode de réalisation, l'adaptateur comprend une frette 9 disposée sur au moins une partie de la surface radialement externe du corps 5. La frette est constituée de matériaux classiquement utilisés en pneumatique à base de textile ou de métal.

Les extrémités 2 radialement externe comprennent chacune un élément de renforcement extérieur 10, encore appelé tringle, constitué en un matériau composite verre-résine.

Comme le montre la figure 2, l'adaptateur 1 est disposé sur une jante 11 partiellement représentée. Cette jante comprend deux sièges de jante 12 séparés par une gorge de jante 13.

Sur le mode de réalisation de la figure 3, l'adaptateur comprend, en plus des éléments cités précédemment, deux saillies 14 disposées chacune, sur le corps 5, et dont les centre sont espacées d'une distance « d » d'au moins 21mm à compter de l'extrémité de la surface d'appui 4.

Ces deux saillies 14 sont constituées en gomme élastomère, éventuellement renforcée par des câbles disposés principalement dans la direction circonférentielle.

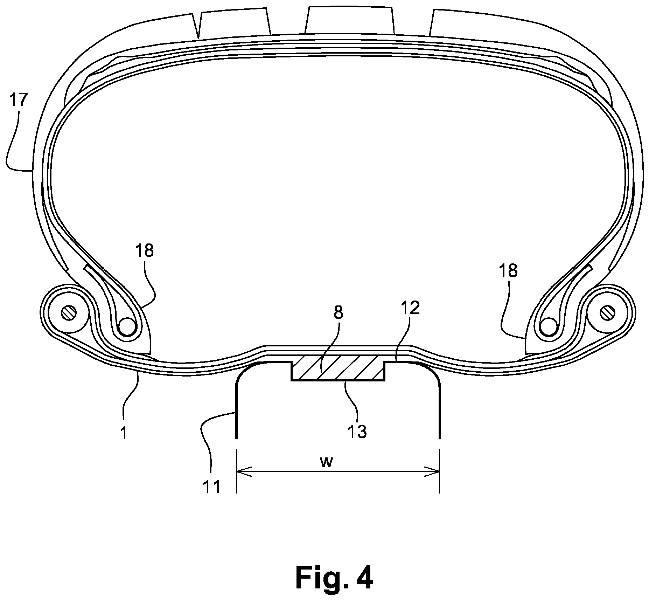

La figure 4 représente un ensemble monté comprenant une jante 11 de largeur W sur laquelle est inséré l'adaptateur 1 et sur lequel est inséré un pneumatique 17 classique par le biais de ses bourrelets 18.

Le montage de cet ensemble s'effectue de manière classique et connue en disposant en force l'adaptateur sur la jante de manière à ce que l'élément de blocage 8 s'insère dans la gorge 13. Les bourrelets 18 du pneumatique 17 sont ensuite disposés chacun sur un siège 12 de l'adaptateur 1. L'ensemble monté est ensuite mis sous sa pression nominale. Sur la figure 4, l'élément de blocage 8 est disposé dans la partie médiane de la jante.

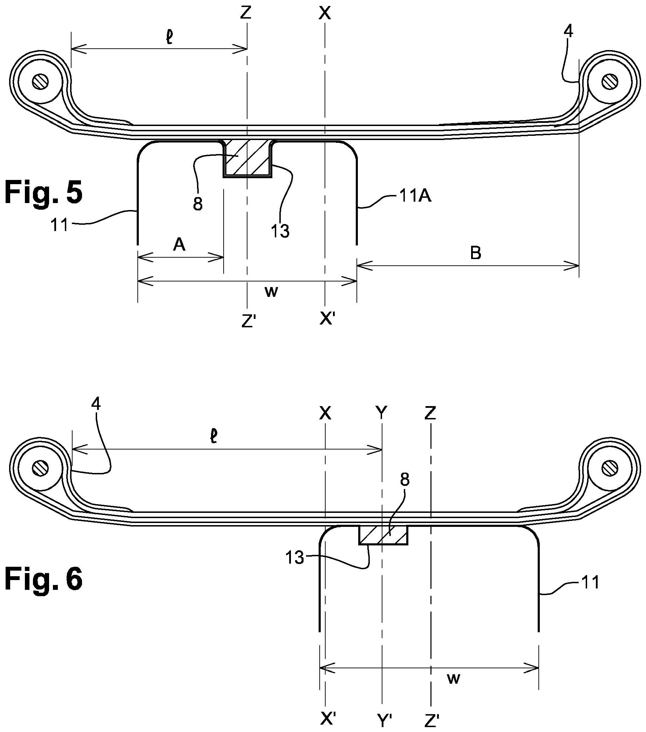

Comme le montre la figure 5, l'élément de blocage 8 est disposé de manière décalée par rapport à l'axe médian XX' de l'adaptateur mais de manière centrée par rapport à l'axe médian ZZ' de la jante. Il est disposé à une distance « l » supérieure ou égale à (W/2 + 21)mm pour une roue de largeur 7,5 pouces, soit de 190,5mm.

La longueur « l » située entre le centre de la gorge de jante et l'extrémité axialement extérieure de l'adaptateur respecte les contraintes physiques A>5mm et B>21mm, où A est la largeur d'un siège de jante et B la distance entre la face d'appui 4 d'une extrémité axialement extérieure de l'adaptateur et une extrémité axiale 11A d'un siège de jante.

Comme le montre la figure 6, l'élément de blocage 8 est disposé de manière décalée par rapport à l'axe médian ZZ' de la jante et par rapport à l'axe médian XX' de l'adaptateur. Dans cette figure, il est disposé à une distance « l » en mm du centre de l'extrémité axialement extérieure côté intérieur du véhicule, où

$$l = L - W + 5 + W/200 - 21$$

Pour une roue pour véhicule pout tourisme de référence 7,5 J 17, West égale à 50mm mm, L à 190,5 mm et « l » à 56 mm.

Les exemples qui suivent montrent les résultats obtenus avec l'adaptateur selon l'invention.

### Exemple : Essais sur choc trottoir

Cet essai consiste à faire monter un ensemble monté sur un trottoir selon un angle d'attaque de 30°. Le choix de cet angle est basé sur le fait qu'il constitue une sollicitation très pénalisante pour un pneumatique. L'essai s'effectue avec deux hauteurs de trottoir différentes (90mm et 110mm).

Le test se déroule de la manière suivante. On effectue plusieurs passages de la roue à des vitesses différentes jusqu'à obtenir la crevaison du pneumatique. La vitesse de départ est de 20km/h, puis on incrémente la vitesse de 5km/h à chaque nouveau passage.

On compare un ensemble classique sans adaptateur (témoin 1) à un ensemble muni d'un adaptateur selon le document WO00/78565 (témoin 2), et à un ensemble muni d'un adaptateur selon l'invention (invention). Ces ensembles sont tous de dimension 205/55R16 comprenant une jante 6.5J16. Les résultats sont rassemblés dans le tableau II suivant et sont donnés en pourcentage :

**Tableau II**

|  | Témoin 1 | Témoin 2 | Invention |
|---|---|---|---|
| **Pourcentage de la vitesse de crevaison par rapport au témoin - hauteur trottoir 90mm** | 100 | >150 | >150 |
| **Niveau d'effort de portée verticale (Fz) relévée à la vitesse de crevaison** | 100 | 50 | 40 |
| **Etat de l'ensemble monté suite aux chocs** | -crevaison du pneu - roue comprenant des marques | -Pneu et roue intacts <br> -Adaptateur déformé plastiquement | Pneu, adaptateur et roue intacts |

Les résultats supérieurs à 100 montrent une amélioration du comportement face à un choc latéral.

L'essai réalisé sur la hauteur de trottoir de 90mm aboutit à la crevaison du pneumatique témoin à une vitesse de 30km/h, alors que l'ensemble selon l'invention ne subit aucun dommage à cette même vitesse, voire à une vitesse de 50km/h.

L'essai réalisé sur la hauteur de trottoir de 110mm aboutit à la crevaison du pneumatique témoin à une vitesse de 20km/h, alors que l'ensemble selon l'invention ne subit aucun dommage à cette même vitesse, voire à une vitesse de 50km/h.

### Revendications

**1.** Ensemble roulant ayant un axe de rotation, ledit ensemble comprenant

- un pneumatique (17) ayant deux bourrelets (18),
- une jante (11) ayant une gorge de jante (13) disposée entre deux sièges de jante (12) ayant chacun une extrémité axialement extérieure, ladite jante présentant une largeur totale W entre chaque extrémité axialement extérieure desdits deux sièges de jante, et

un adaptateur assurant la jonction entre chaque bourrelet (18) et chaque siège de jante (12),
ledit adaptateur ayant

- deux extrémités axialement extérieures (2) comprenant chacune un siège d'adaptateur (3) et une face d'appui (4) d'adaptateur sensiblement comprise dans un plan perpendiculaire à l'axe de rotation,
- un corps (5) reliant lesdites deux extrémités axiales extérieures (2) de manière à former une pièce unitaire et comprenant au moins une armature de renforcement principale (6) qui est ancrée dans chaque extrémité axialement extérieure (2) à un élément de renforcement extérieur (10), tel qu'une tringle, pour former un retournement ledit corps (5) comprenant un élément de blocage (8) destiné à caler ledit adaptateur dans la gorge de jante (13) et
- une face (16) destinée à être en contact avec chaque siège de jante (12) et avec la gorge de jante (13), et disposée radialement à l'intérieur,

ledit adaptateur présentant une largeur axiale totale L comprise entre chaque siège d'adaptateur (3), **caractérisé en ce que** le rapport W/L est supérieur ou égale à 20% et inférieur ou égale à 60%.

2. Ensemble roulant selon la revendication 1, **caractérisé en ce que** le rapport W/L est de préférence supérieur ou égale à 25% et inférieur ou égale à 50%.

3. Ensemble roulant selon la revendication 1, **caractérisé en ce que** chaque extrémité axiale extérieure (2) comprend un élément de renforcement extérieur (10) choisi parmi un métal, un matériau composite, un matériau thermoplastique, une résine.

4. Ensemble roulant selon la revendication 1, **caractérisé en ce que** l'élément de blocage (8) présente une longueur axiale totale supérieure ou égale à 10% et inférieure ou égale à 80%, et de préférence supérieure ou égale à 30% et inférieure ou égale à 50% de la largeur totale W de la jante.

5. Ensemble roulant selon l'une des revendications 1 ou 4, **caractérisé en ce que** l'élément de blocage (8) présente un renfort ayant un module d'extension supérieur à 4GPa, et de préférence supérieur à 12GPa.

6. Ensemble roulant selon l'une des revendications 1 à 5, **caractérisé en ce que** l'élément de blocage (8) comprend un renfort choisi parmi le métal, le nylon, le PET, l'aramide.

7. Ensemble roulant selon la revendication 1, **caractérisé en ce que** le corps (5) comprend au moins une saillie (14) disposée sur au moins une extrémité axialement extérieure.

8. Ensemble roulant selon la revendication 7, **caractérisé en ce que** la saillie (14) est choisie parmi un métal, un matériau composite, un matériau thermoplastique, une résine.

9. Ensemble roulant selon l'une des revendications précédentes, **caractérisé en ce qu'**il comprend une frette (9) présentant un module d'extension supérieur ou égal à 4GPa.

**Patentansprüche**

1. Radanordnung mit einer Drehachse, die Anordnung umfassend

- einen Reifen (17) mit zwei Wülsten (18),
- eine Felge (11) mit einer Felgenauskehlung (13), die zwischen zwei Felgensitzen (12) angeordnet ist, die jeweils ein axial äußeres Ende aufweisen, wobei die Felge eine Gesamtbreite W zwischen jedem axial äußeren Ende der zwei Felgensitze aufweist, und

einen Adapter, der die Verbindung zwischen jedem Wulst (18) und jedem Felgensitz (12) sicherstellt, der Adapter aufweisend

- zwei axial äußere Enden (2), die jeweils einen Adaptersitz (3) und eine Adapterauflagefläche (4), die im Wesentlichen in einer Ebene senkrecht zur Drehachse liegt, umfassen,
- einen Körper (5), der die zwei äußeren axialen Enden (2) so verbindet, dass sie ein einheitliches Teil bilden, und mindestens eine Hauptverstärkungsarmierung (6) umfasst, die in jedem axial äußeren Ende (2) an einem äußeren Verstärkungselement (10) verankert ist, wie beispielsweise einem Wulstkern, um einen Umschlag zu bilden, wobei der Körper (5) ein Blockierelement (8) umfasst, das dazu bestimmt ist, den Adapter in die Auskehlung der Felge (13) zu klemmen, und
- eine Seite (16), die dazu bestimmt ist, mit jedem Felgensitz (12) und mit der Felgenauskehlung (13) in Kontakt zu stehen, und radial innerhalb angeordnet ist, wobei der Adapter eine axiale Gesamtbreite L zwischen jedem Adaptersitz (3) aufweist, **dadurch gekennzeichnet, dass** das Verhältnis W/L größer als oder gleich 20 % und kleiner als oder gleich 60 % ist.

2. Radanordnung nach Anspruch 1, **dadurch gekennzeichnet, dass** das Verhältnis W/L vorzugsweise größer als oder gleich 25 % und kleiner als oder gleich 50 % ist.

3. Radanordnung nach Anspruch 1, **dadurch gekennzeichnet, dass** jedes äußere axiale Ende (2) ein äußeres Verstärkungselement (10) umfasst, das aus einem Metall, einem Verbundmaterial, einem thermoplastischen Material, einem Harz gewählt ist.

4. Radanordnung nach Anspruch 1, **dadurch gekennzeichnet, dass** das Blockierelement (8) eine axiale Gesamtlänge größer als oder gleich 10 % und kleiner als oder gleich 80 %, und vorzugsweise größer als oder gleich 30 % und kleiner als oder gleich 50 % der Gesamtbreite W der Felge aufweist.

5. Radanordnung nach einem der Ansprüche 1 oder 4, **dadurch gekennzeichnet, dass** das Blockierelement (8) eine Verstärkung mit einem Dehnungsmodul über 4 GPa und vorzugsweise über 12 GPa aufweist.

6. Radanordnung nach einem der Ansprüche 1 bis 5, **dadurch gekennzeichnet, dass** das Blockierelement (8) eine Verstärkung umfasst, die aus Metall, Nylon, PET, Aramid gewählt ist.

7. Radanordnung nach Anspruch 1, **dadurch gekennzeichnet, dass** der Körper (5) mindestens einen Vorsprung (14) umfasst, der auf mindestens einem axial äußeren Ende angeordnet ist.

8. Radanordnung nach Anspruch 7, **dadurch gekennzeichnet, dass** der Vorsprung (14) aus einem Metall, einem Verbundmaterial, einem thermoplastischen Material, einem Harz gewählt ist.

9. Radanordnung nach einem der vorhergehenden Ansprüche, **dadurch gekennzeichnet, dass** sie einen Reif (9) umfasst, der ein Dehnungsmodul größer als oder gleich 4 GPa aufweist.

**Claims**

1. Rolling assembly having an axis of rotation, the said assembly comprising

   - a tyre (17) having two beads (18),
   - a rim (11) having a rim well (13) positioned between two rim seats (12), each one having an axially outer end, the said rim having a total width W between each axially outer end of the said two rim seats, and

   an adapter providing the connection between each bead (18) and each rim seat (12),
   the said adapter having

   - two axially outer ends (2) each one comprising an adapter seat (3) and an adapter bearing face (4) substantially comprised in a plane perpendicular to the axis of rotation,
   - a body (5) connecting the said two outer axial ends (2) so as to form a single component and comprising at least one main reinforcement (6) which is anchored in each axially outer end (2) to each outer reinforcing element (10), such as a bead wire, to form a turnup, the said body (5) comprising an immobilizing element (8) intended to wedge the said adapter in the rim well (13), and
   - a face (16) intended to be in contact with each rim seat (12) and with the rim well, (13) and positioned radially on the inside,

the said adapter having a total axial width L comprised between each adapter seat (3), **characterized in that** the ratio W/L is greater than or equal to 20% and less than or equal to 60%.

2. Rolling assembly according to Claim 1, **characterized in that** the ratio W/L is preferably greater than or equal to 25% and less than or equal to 50%.

3. Rolling assembly according to Claim 1, **characterized in that** each outer axial end (2) comprises an outer reinforcing element (10) selected from a metal, a composite material, a thermoplastic material, a resin.

4. Rolling assembly according to Claim 1, **characterized in that** the immobilizing element (8) has a total axial length greater than or equal to 10% and less than or equal to 80%, and preferably greater than or equal to 30% and less than or equal to 50% of the total width W of the rim.

5. Rolling assembly according to one of Claims 1 and 4, **characterized in that** the immobilizing element (8) has a reinforcer with an extension modulus greater than 4 GPa, and preferably greater than 12 GPa.

6. Rolling assembly according to one of Claims 1 to 5, **characterized in that** the immobilizing element (8) comprises a reinforcer selected from metal, nylon, PET, aramid.

7. Rolling assembly according to Claim 1, **characterized in that** the body (5) comprises at least one projection (14) positioned on at least one axially outer end.

8. Rolling assembly according to Claim 7, **characterized in that** the projection (14) is selected from a metal, a composite material, a thermoplastic material, a resin.

9. Rolling assembly according to one of the preceding claims, **characterized in that** it comprises a hoop (9) having an extension modulus greater than or equal to 4 GP.

**Fig. 1**

**Fig. 2**

**Fig. 3**

**Fig. 4**

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02068223 A
- US 1250405 A
- WO 2013045618 A1
- CA 2281651
- GB 2039831 A
- WO 0078565 A